(19) Europäisches Patentamt
European Patent Office
Office européen des brevets

(11) **EP 4 728 974 A2**

(12) **EUROPÄISCHE PATENTANMELDUNG**

(43) Veröffentlichungstag:
22.04.2026 Patentblatt 2026/17

(21) Anmeldenummer: 26156603.8

(22) Anmeldetag: **19.01.2021**

(51) Internationale Patentklassifikation (IPC):
*A61B 5/00* *(2006.01)*

(52) Gemeinsame Patentklassifikation (CPC):
**G08B 21/043; G08B 21/0461**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2020 DE 102020201222**

(62) Dokumentnummer(n) der früheren Anmeldung(en) nach Art. 76 EPÜ:
**21701277.2 / 4 097 702**

(71) Anmelder: **Robert Bosch GmbH**
**70442 Stuttgart (DE)**

(72) Erfinder:
• **Stegmaier, Juergen**
**72827 Wannweil (DE)**
• **Schnee, Jan**
**71093 Weil Im Schoenbuch (DE)**

Bemerkungen:
Diese Anmeldung ist am 05.02.2026 als Teilanmeldung zu der unter INID-Code 62 erwähnten Anmeldung eingereicht worden.

(54) **VERFAHREN ZUR ERKENNUNG DES FALLS EINES MOBILEN ENDGERÄTS AUS EINER HALTERUNG AN EINEM FAHRRAD UND MOBILES ENDGERÄT**

(57) Das nachfolgend beschrieben und beanspruchte Verfahren, sowie eine Vorrichtung, die dieses erfindungsgemäße Verfahren ausführt, ist dazu eingerichtet, die unfallbedingte Entfernung eines mobilen Endgeräts aus einer Halterung schnell zu erfassen und eine entsprechende Information zu erzeugen, die den mit dem Unfall verbundenen Fall beziehungsweise Sturz charakterisiert.

Zur Realisierung des erfindungsgemäßen Verfahrens werden Drehratensensorgrößen und Beschleunigungssensorgrößen des mobilen Endgeräts erfasst. Dabei wird eine Rotation beziehungsweise Drehung des mobilen Endgeräts erkannt, indem die aktuell erfassten und/oder integrierten Drehratensensorgrößen mit Vergangenheitswerten und/oder Schwellenwerten verglichen werden. In einem weiteren Schritt wird eine Bewegung des mobilen Endgeräts auf der Basis der aktuell erfassten und/oder integrierten Beschleunigungsgrößen erkannt. Hierbei kann optional ebenfalls ein Vergleich mit Vergangenheitswerte und/oder Schwellenwerten durchgeführt werden. Die Feststellung eines insbesondere unfallbedingten Sturzes des Fahrzeugs und/oder des Falls des mobilen Endgeräts aus der Halterung heraus erfolgt dann aufgrund der erkannten Rotation und der erkannten Bewegung.

**Fig. 2**

EP 4 728 974 A2

**Beschreibung**

Die Erfindung betrifft ein Verfahren und eine Vorrichtung zur Überwachung und Erkennung des Falls oder Sturzes eines mobilen Endgeräts, insbesondere eines Endgeräts, welches aus einer Halterung an einem Fahrzeugs herausfällt.

Stand der Technik

Die Verwendung von mobilen Endgeräten und insbesondere Smartphones für verschiedene Anwendungsbereiche außerhalb der Telefonie hat in den letzten Jahren deutlich zugenommen. So können beispielsweise Elektrofahrräder schon mittels eines mitgeführten oder am Lenker positionierten Smartphones gesteuert werden.

Um die Elektronik von mobilen Endgeräten bei einem Fall oder einem Sturz zu schützen, weisen viele derartige Geräte bereits Verfahren auf, die einen freien Fall erkennen, um empfindliche Komponenten zu schützen, beispielsweise indem diese Komponenten stromlos geschalten werden. Derartige Verfahren zielen jedoch im Wesentlichen darauf ab, den unmittelbaren freien Fall zu erkennen, falls dem Nutzer das mobile Endgerät bei der Nutzung aus der Hand fällt.

Wird nun ein derartiges mobiles Endgerät an einem Fahrzeug befestigt, z.B. an einem Lenker eines Zweirads, ist eine Erkennung eines freien Falls oftmals nicht zielführend, um Unfälle des Zweirads zu erkennen. Wird beispielsweise das mobile Endgerät aus der Halterung am Zweirad herausgeschleudert, ist eine (Flug-)Bewegung zu erwarten, die erst in einer späteren Phase einen im Wesentlichen freien Fall aufweist.

Mit der vorliegenden Erfindung soll daher ein Verfahren sowie eine Vorrichtung geschaffen werden, die einen Fall beziehungsweise einen Sturz eines mobilen Endgeräts in Abhängigkeit von weiteren Randbedingungen und unter weiteren möglichen Nutzungssituationen schneller erkennt.

Offenbarung der Erfindung

Das nachfolgend beschrieben und beanspruchte Verfahren, sowie eine Vorrichtung, die dieses erfindungsgemäße Verfahren ausführt, ist dazu eingerichtet, die unfallbedingte Entfernung eines mobilen Endgeräts aus einer Halterung schnell zu erfassen und eine entsprechende Information zu erzeugen, die den mit dem Unfall verbundenen Fall beziehungsweise Sturz charakterisiert.

Zur Realisierung des erfindungsgemäßen Verfahrens werden Drehratensensorgrößen und Beschleunigungssensorgrößen des mobilen Endgeräts erfasst. Dabei wird eine Rotation beziehungsweise Drehung des mobilen Endgeräts erkannt, indem die aktuell erfassten und/oder integrierten Drehratensensorgrößen mit Vergangenheitswerten und/oder Schwellenwerten verglichen werden. In einem weiteren Schritt wird eine Bewegung des mobilen Endgeräts auf der Basis der aktuell erfassten und/oder integrierten Beschleunigungsgrößen erkannt. Hierbei kann optional ebenfalls ein Vergleich mit Vergangenheitswerte und/oder Schwellenwerten durchgeführt werden. Die Feststellung eines insbesondere unfallbedingten Sturzes des Fahrzeugs und/oder des Falls des mobilen Endgeräts aus der Halterung heraus erfolgt dann aufgrund der erkannten Rotation und der erkannten Bewegung. Optional kann hier auch die Geschwindigkeit und/oder die Größe der Bewegung eine Rolle spielen, um endgültig eine Fall-Erkennung-Information zu erzeugen.

Da beim Herausschleudern des mobilen Endgeräts aus der Halterung, z.B. des Smartphones, kein normaler nach unten gerichteter Fall stattfindet, kann schneller die Fallsituation und somit der Unfall detektiert werden. Durch die spezielle Berücksichtigung der Rotation bei der Erkennung des Sturzes beziehungsweise des Falls des mobilen Endgeräts entsteht gegenüber einer reinen Fall-Detektion die Möglichkeit, die spezielle Situation bei einem Unfall eines Zweirads zu erkennen. Darüber hinaus kann über die Schnelligkeit der Rotation sowie der Bewegung des mobilen Endgeräts aus der Halterung heraus eine Klassifizierung des Sturzes erfolgen, die für die weiteren Maßnahmen, insbesondere Notrufe, hilfreich sein können.

In einer Weiterbildung der Erfindung werden die Drehratensensorgrößen und/oder die Beschleunigungsgrößen schon vor dem zu detektierenden Unfall beziehungsweise Sturz oder Falls erfasst. Hieraus lässt sich eine Bewegungsebene ableiten, in der sich das Fahrzeugs beziehungsweise das Zweirad bewegt. So kann sowohl eine Längsrichtung x identifiziert werden, in der sich das Fahrzeug im Wesentlichen vorwärts bewegt sowie eine Querrichtung y als seitliche Bewegungsrichtung, die beispielsweise bei Kurvenfahrten oder Abbiegevorgängen zu erkennen ist. Durch die Erfassung der regulären Bewegung des mobilen Endgeräts in der Halterung am Fahrzeug beziehungsweise Zweirads kann eine untypische Abweichung gerade in Längsrichtung und/oder Querrichtung ein Indiz und somit ein Auslöser zur Erkennung eines Unfalls in Abhängigkeit des Herausschleuderns des mobilen Endgeräts aus der Halterung sein. Optional kann vorgesehen sein, dass gerade die Erkennung einer untypischen Rotation um die Hochachse z beziehungsweise eine untypische Bewegung des mobilen Endgeräts in z-Richtung ebenfalls einen Sturz oder einen Fall impliziert und so zur Erzeugung einer Fall-Information führen kann.

Besonders vorteilhaft stellt sich die Erkennung der Rotation dar, falls das erfindungsgemäße Verfahren die Drehratengröße in wenigstens einer Raumrichtung integriert und so eine zeitliche Berücksichtigung der Rotation beziehungsweise Drehung mit berücksichtigt. Im Folgenden kann so eine langsame Drehung von einer schnellen Drehung unterschieden werden, indem die so erhaltene integrierte Rotationsgröße mit einem entsprechenden ersten Schwellenwert verglichen wird. So kann mit dem ersten Schwellenwert eine Mindestrotationsgeschwindigkeit verbunden sein, die erreicht werden muss, um die Erkennung des Falls oder einen damit verbundenen Unfall des Fahrzeugs zu erkennen. Darüber hinaus ist auch die Klassifizierung des Unfalls über die Berücksichtigung der Rotations- oder Drehgeschwindigkeit möglich, beispielsweise indem mehrere erste Schwellenwerte verwendet werden, mit der die insbesondere integrierte Rotationsgröße verglichen wird.

Zur Erkennung des Falls des mobilen Endgeräts beziehungsweise der Erkennung des Herausschleuderns aus seiner Halterung ist erfindungsgemäß vorgesehen, die Bewegung des mobilen Endgeräts in Abhängigkeit der erfassten Beschleunigungsgrößen zu erkennen. So kann bei einer plötzlich eintretenden Beschleunigung davon ausgegangen werden, dass die Ursache eine ungewollte Entfernung des mobilen Endgeräts aus der Halterung ist, insbesondere, wenn diese Beschleunigung nicht in Fahrtrichtung beziehungsweise in Längsrichtung des Fahrzeugs erfolgt und/oder untypische Größen aufweist, die bei einer normalen Fahrtätigkeit nicht auftreten. Hierzu kann die aktuelle erfasste oder die integrierte Beschleunigungsgröße mit einem oder mehreren Schwellenwerten verglichen werden.

In einer besonderen Ausgestaltung der Erfindung ist vorgesehen, die Beschleunigungsvarianz in allen drei Raumrichtungen zu bilden und den so erhaltenen Wert mit einem zweiten Schwellenwert zu vergleichen. Ergibt sich hierbei, dass die gesamte Beschleunigungsvarianz innerhalb eines vorgegebenen Zeitraums, z.B. innerhalb von 0,1 s, den zweiten Schwellenwert übersteigt, so kann davon ausgegangen werden, dass eine plötzliche Beschleunigung stattgefunden hat, die mit einem Herausschleudern des mobilen Endgeräts aus der Halterung verbunden ist.

Wie auch bei der Erkennung der Rotation beziehungsweise Drehung anhand der Drehratensensorgrößen kann auch bei der Erkennung der Bewegung des mobilen Endgeräts die räumlichen Beschleunigungsgrößen in Relation zur Bewegungsebene des Fahrzeugs oder Zweirads berücksichtigt werden.

Zur Erkennung der Bewegungsebene des Fahrzeugs oder Zweirads, welche gleichzeitig auch die Bewegungsebene des mobilen Endgeräts darstellt, können die Drehratensensorgrößen und/oder Beschleunigungsgrößen der Bewegung des Fahrzeugs vor einem möglichen Sturz oder Unfall des Fahrzeugs berücksichtigt werden. Zur Erkennung der Rotation beziehungsweise der Drehung oder der Bewegung des mobilen Endgeräts können anschließend die entsprechenden Komponenten in Längsrichtung oder Querrichtung herangezogen werden. Alternativ können jedoch auch gerade die entsprechenden Richtungskomponenten in Richtung der Hochachse z verwendet werden, da diese Bewegungsrichtung bei einer normalen Fahrtätigkeit des Fahrzeugs nur geringe Änderungen der entsprechenden Sensorgröße oder deren Komponente nach sich ziehen würde.

Ausgehend von der Erkennung des Sturzes oder des Falls des Fahrzeugs beziehungsweise des Herausschleuderns des mobilen Endgeräts aus der Halterung kann das Verfahren eine Klassifizierung der Fall-Information erzeugen. So kann beispielsweise bei einer besonders ausgeprägten Rotation oder schnellen Bewegung von einem abrupten Sturz des Fahrzeugs oder Zweirads ausgegangen werden. Um entsprechende Hilfe anzufordern, kann daher vorgesehen sein, dass das Verfahren basierend auf der erzeugten Fall-Information oder der Schwere des durch die Klassifizierung erkannten Unfalls eine Funkverbindung zu einem Notfall aufbaut. Hierbei können ebenfalls gegebenenfalls bereits Details zu dem Unfall versendet werden, u.a. GPS-Daten oder sonstige Informationen, die zur Verfügung stehen.

Weitere Vorteile ergeben sich aus der nachfolgenden Beschreibung von Ausführungsbeispielen bzw. aus den abhängigen Patentansprüchen.

Kurze Beschreibung der Zeichnungen

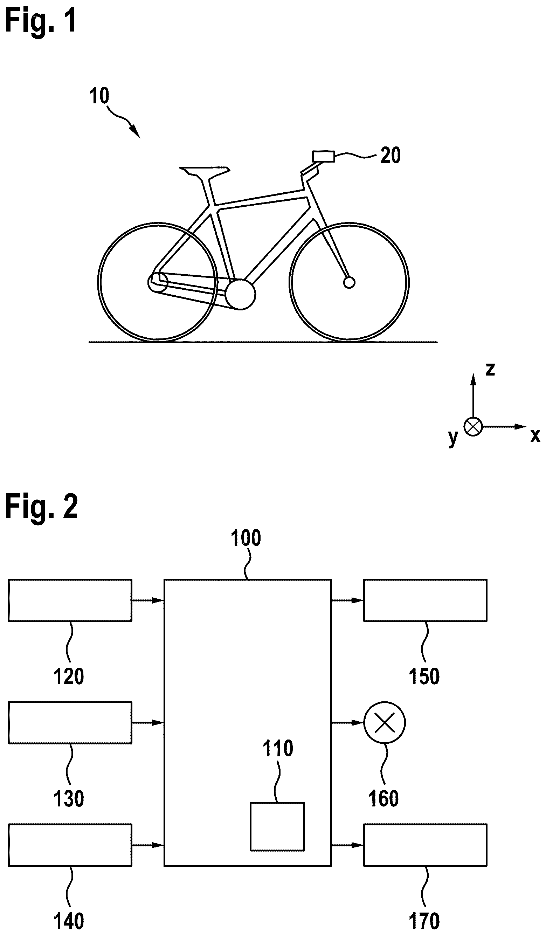

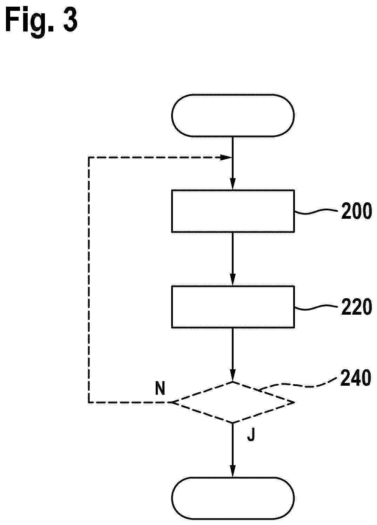

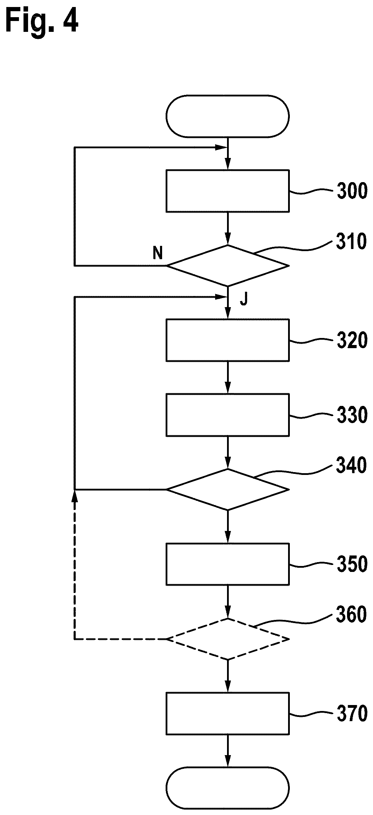

Figur 1 zeigt schematisch ein Zweirad mit einem mobilen Endgerät sowie ein Koordinatensystem, in welchem sich das Zweirad bei einer normalen Fahrtätigkeit bewegt. Das Blockschaltbild der Figur 2 zeigt eine mögliche Realisierung einer erfindungsgemäßen Vorrichtung. Die Flussdiagramme der Figuren 3 und 4 beschreiben mögliche Ausführungsbeispiele der erfindungsgemäßen Verfahren.

Ausführungsformen der Erfindung

Zur Beschreibung der Erfindung wird von einem Zweirad in Form eines Fahrrads 10 ausgegangen, wobei auch andere Fahrzeuge wie Elektrofahrräder, Motorräder, eScooter, Kinderwägen, Roller oder auch Kraftwägen mit dieser Erfindung ausgestattet sein könnte. Im vorliegenden Fall des Fahrrads 10 ist vorgesehen, dass ein Smartphone 20 als mobiles Endgerät vorgesehen ist, welches am Lenker des Fahrrads 10 angebracht ist. Das Smartphone 20 dient hierbei beispielsweise als Navigationsinstrument und/oder als Anzeige der fahrdynamischen Parameter. Zur Durchführung des erfindungsgemäßen Verfahrens greift das Smartphone 20 auf die Sensorwerte zurück, die durch die im Smartphone 20 zur Verfügung stehenden Sensoren bereit gestellt werden. Das Fahrrad bewegt sich üblicherweise im Wesentlichen auf der Fahrbahn in Längsrichtung x vorwärts. Durch Abbiege- und Kurvenfahrten wird die Bewegungsebene durch eine zusätzliche seitliche Querrichtung y aufgespannt. Eine Bewegung in Richtung der Hochachse z findet beispielsweise im Rahmen von Anstiegen und Bergabfahrten statt. Weitere Bewegungen, die sich in Richtung der Hochachse auswirken können, werden durch Rotationen in Richtung der x-Achse oder durch unebene Fahrbahnen erzeugt. Alle diese Bewegungen in Richtung der d-Achse lassen sich durch charakteristische Größenordnungen der Veränderungsgeschwindigkeit, d.h. der dz/dt, voneinander unterscheiden. So ist beispielsweise das Befahren eines Anstiegs oder einer Bergabfahrt mit einer längeren Zeitkonstanten verbunden als das seitliche Umkippen des Fahrrads im Wesentlichen entlang der x-Achse. Fahrbahnunebenheiten zeichnen sich dagegen durch sehr kleine Bewegungen in z-Richtung innerhalb kurzer Zeit aus.

Die Sensoren innerhalb des Smartphones 20 sind auf ihr eigenes Koordinatensystem ausgerichtet. Durch die Anbringung des Smartphones am Lenker ist daher eine Neukalibrierung hinsichtlich der Ausrichtung in das durch die Bewegung festgelegte Koordinatensystem notwendig. So können die ortsaufgelösten Sensorgrößen des Drehratensensors beziehungsweise des Beschleunigungssensors im Smartphone dazu genutzt werden, während der normalen Fahrtätigkeit dieses definierte Koordinatensystem zu erfassen. Etwaige Abweichungen, z.B. in z-Richtung, die über ein gewisses Maß hinaus gehen, insbesondere hinsichtlich der zeitlichen Abhängigkeit, können so als Indiz für einen Sturz des Fahrrads gewertet werden. Hierbei kann, wie bereits vorstehend erwähnt, die Größenordnung, in der die Änderungsgeschwindigkeit dz/dt in Richtung der z-Achse vorliegt, berücksichtigt werden, um diese Bewegung für die Sturzerkennung heranzuziehen. So kann vorgesehen sein, dass die Änderung in z-Richtung ausreichend lange vorliegen muss, um beispielsweise die Bewegung von einer rauen Fahrbahn zu unterschieden.

In der Figur 2 ist schematisch ein Smartphone 20 dargestellt, welches eine Auswerteeinheit 100 aufweist. Die Auswerteeinheit 100 besitzt einen Speicher 110, in dem verschiedenen Schwellenwerte abgespeichert sein können. Weiter erfasst die Auswerteeinheit 100 die ortsaufgelösten Sensorgrößen eines Drehratensensors 120 und eines Beschleunigungssensors 130. Darüber hinaus kann die Auswerteeinheit 100 auch weitere Sensorgrößen erfassen, sofern das Smartphone entsprechende Sensoren aufweist oder diese von externen Sensoren eingelesen werden können, die beispielsweise am Zweirad angebracht sind. Denkbar ist hierbei beispielsweise, dass ein Neigungssensor entsprechende Sensorgrößen über den Anstieg der Fahrt mit dem Fahrrad liefert, insbesondere deren Steigungsgeschwindigkeit. Derartige zusätzliche Sensorgrößen können die Genauigkeit der nachfolgenden Erkennung eines Sturzes oder Unfalls erhöhen, indem die zugrunde liegenden Daten geschärft werden. Optional kann auch vorgesehen sein, dass die Auswerteeinheit 100 über eine weitere Verbindung explizit von einem gesonderten Modul 140 über einen stattgefundenen Crash Informiert wird. In diesem Fall kann die Auswerteeinheit 100 basierend auf den erhaltenen Sensorgrößen eine noch bessere Klassifizierung des Unfalls ableiten und gegebenenfalls eine Nachricht an eine Notfallstelle 170 weiterleiten. Ohne diese zusätzliche Crash-Information durch das Modul 140 kann das erfindungsgemäße Verfahren, welches in der Auswerteeinheit 100 ausgeführt wird, basierend auf den Drehratensensorgrößen und den Beschleunigungsgrößen einen Unfall, einen Sturz oder auch nur das Herausschleudern des Smartphones 20 aus der Halterung am Lenker erkennen und eine entsprechende Fall-Information erzeugen. Diese Fall-Information kann dann an entsprechende Ansprechstellen 150 oder 170 weitergeleitet werden oder auch auf einem Display 160 angezeigt werden. Denkbar ist beispielsweise, dass ein allgemeiner Notruf 150 abgesetzt wird oder eine spezielle Notrufstelle 170 kontaktiert wird.

Anhand des Flussdiagramms der Figur 3 soll eine optionale Ableitung des Koordinatensystem beschrieben werden, welches die Bewegung des Fahrrads auf der Fahrbahn berücksichtigt. Hierzu werden zunächst in einem ersten Schritt 200 die ortsaufgelösten Drehratensensorgrößen sowie Beschleunigungsgrößen während einer normalen Fahrtätigkeit des Fahrzeugs beziehungsweise des Zweirads erfasst. Anschließend wird aus den so erfassten Sensorgrößen im Schritt 220 eine Bewegungsebene in der bevorzugten x-/y-Richtung abgeleitet. Basierend auf diesen Richtungsdefinitionen kann die Kalibrierung des Koordinatensystems des Smartphones durchgeführt werden. Alternativ oder zusätzlich kann durch die Definition der Bewegungsebene erkannt werden, ob sich das Smartphone 20 aus dieser Bewegungsebene heraus bewegt, z.B. indem es aus der Halterung am Lenker herausgeschleudert wird.

Optional kann in einem weiteren Schritt 240 überprüft werden, ob die erfassten Sensorgrößen ausreichen, um eine Bewegungsebene in x-/y-Richtung abzuleiten. Ist das nicht der Fall, z.B. weil das Fahrrad aktuell eine Steigung fährt oder die Sensordaten nicht eindeutig oder zu unscharf sind, kann erneut mit der Erfassung der Sensordaten in Schritt 200 verfahren werden.

Das erfindungsgemäße Verfahren zur Erkennen eines Sturzes des Fahrrads oder eines Falls des Smartphones aus seiner Halterung soll nachfolgend anhand dem Flussdiagramm der Figur 4 beschrieben werden. Zunächst werden in einem ersten Schritt 300 ortsaufgelöste Sensorgrößen für die Drehrate und die Beschleunigung erfasst. Hierzu ist insbesondere vorgesehen, dass das Verfahren auf einem Smartphone abläuft, welches die entsprechenden Sensoren für Drehrate und Beschleunigung und die dabei geforderte richtungsabhängige Auflösung beinhaltet. Um belastbare und eindeutige Sensorwerte zu erhalten, kann vorgesehen sein, eine Reihe von Beschleunigungsgrößen zu erfassen, z.B. über 10 Samples bei einer Abtastrate von 100 Hz. Im nächsten Schritt 310 wird aus den so erfassten Beschleunigungsgrößen gemäß

$$\sigma^2_{ax,ay,az} = \sigma^2_{ax} + \sigma^2_{ay} + \sigma^2_{az}$$

die Summe der Beschleunigungsvarianz gebildet. Übersteigt diese Beschleunigungsvarianz $\sigma^2_{ax,ay,az}$ einen vorgebbaren dritten Schwellenwert $SW_3$ kann auf einen Unfall, einen Aufprall oder eine Kollision geschlossen werden, welche die Ursache für das Herausschleudern des Smartphones aus der Halterung darstellt und somit die Beschleunigung hervorruft. Ist die Beschleunigungsvarianz kleiner als der dritte Schwellenwert $SW_3$ kann das Verfahren mit dem Schritt 300 erneut durchlaufen oder beendet werden. Im nachfolgenden Schritt 320 werden die Drehratensensorsignale erfasst, zumindest in Längsrichtung x und Querrichtung y bezogen auf die Bewegungsebene des Fahrzeugs beziehungsweise dessen Fahrzeugkoordinatensystem. Die Drehratensensorsignale in Richtung der Hochachse z, insbesondere deren Änderungsgeschwindigkeit, können optional unberücksichtigt bleiben, um keine Fehlauslösung aufgrund schneller Lenkerdrehungen auszulösen. Die so erhaltenen Drehratensensorgrößen werden im nächsten Schritt 330 integriert, um daraus die Rotation beziehungsweise die Drehbewegung des Smartphones abzuleiten. Optional kann im Schritt 330 zusätzlich auch eine Überprüfung der Beschleunigungssignale durchgeführt werden. Neben der erfassten kurzfristigen Erhöhung der Beschleunigung können aus den beispielsweise zusätzlich in Schritt 320 erfassten aktuellen Beschleunigungsgrößen ein freier Fall erkannt werden. Hierzu kann beispielsweise die Beschleunigungs-2-Norm oder auch die Vektornorm der Beschleunigung gebildet werden, um zu erkennen, ob sich das Smartphone in einer Fallbewegung befindet. Diese Größe kann mit einem zweiten Schwellenwert $SW_2$ (z.B. 100 mg in 100 ms) verglichen werden, um daraus die Fallbewegung abzuleiten. Im nächsten Schritt 340 kann so aus den einzeln oder gemeinsam integrierten Drehratensensorgrößen im Vergleich mit entsprechenden ersten Schwellenwerten $SW_{1,x}$ oder $SW_{1,y}$ (bezogen auf die einzelnen Richtungskomponenten) beziehungsweise $SW_{1,xy}$ (bezogen auf den Richtungsvektor in xy-Richtung) erkannt werden, ob eine ausreichend schnelle Drehung des Smartphones vorliegt, um ein Herausschleudern aus der Halterung und somit einen nennenswerten Sturz oder Unfall des Fahrrads zu erkennen. Zusätzlich kann im Schritt 340 die Erkennung des fallenden Smartphones verwendet werden, um den Vorgang zu verifizieren. Optional kann auch eine Kombination beider Bedingungen herangezogen werden, d.h. des Vorliegen einer entsprechenden Rotation und eines freien Falls, wobei hierbei eine dynamische Verknüpfung beider Einzel-Merkmale vorgenommen werden kann. So kann vorgesehen sein, dass bei geringer vorliegender Beschleunigungsvarianz eine geringere Rotation oder Drehung erkannt werden muss, um einen Sturz zu erkennen. Gleiches gilt für den umgekehrten Fall, bei dem eine große Rotation nur eine geringe Beschleunigungsvarianz erfordert, um das Herausschleudern des Smartphones zu detektieren. Werden die entsprechenden Bedingungen nicht erfüllt, d.h. wird eine nicht ausreichende Rotation erkannt oder befindet sich das Smartphone nicht in einer Fallbewegung kann das Verfahren mit dem Schritt 320 erneut durchlaufen werden. Ansonsten wird im Schritt 350 festgestellt, dass die Rotation beziehungsweise Drehung des Smartphones ausreichend groß (z.B. $\Delta\gamma > 360°$ innerhalb 1 s, z.B. bei einer Abtastrate der Erfassung der Sensorgrößen von 100 Hz), so dass von einem Herausschleudern aus der Halterung ausgegangen werden kann. Im optional nachfolgenden Schritt 360 kann eine Abbruchbedingung definiert werden. Hierbei wird anhand der erneut erfassten aktuellen Beschleunigungssignal erkannt, ob das Smartphone nach dem Herausschleudern aus der Halterung zur Ruhe gekommen ist. Falls das nicht der Fall ist, kann erneut das Verfahren mit dem schritt 320 durchlaufen werden. Dieses erneute Durchlaufen ermöglicht es, die Schwere der Kollision beziehungsweise des Unfalls zu detektieren, indem ein längerer Fall des Smartphones detektiert wird. Ansonsten wird im letzten Schritt 370 eine Fall-Information erzeugt. Diese Fall-Information kann als Mitteilung an einen Notdienst abgesendet werden. Wird eine Klassifizierung des Sturzes, z.B. durch die Verwendung verschiedener Schwellenwerte für die Rotation oder Beschleunigung, durchgeführt, kann auch auf die Schwere des Unfalls geschlossen werden. In diesem Fall kann die Fall-Information eine Klassifizierung enthalten, so dass je nach Schwere des Unfalls verschiedene Notfallmaßnahmen durchgeführt werden. Dies kann von einer einfachen Mitteilung bis hin zu einem Notruf mit der Durchgang bekannter Parameter zum Unfall reichen.

Optional kann auch vorgesehen sein, dass das Verfahren einen Crash dadurch detektiert wird, dass ein elektrischer Kontakt in der Halterung überprüft wird. Liegt dem Verfahren eine derartige separate Information vor, kann sich das Verfahren auf die Klassifizierung des Unfalls spezialisieren.

## Patentansprüche

1. Verfahren zur Erkennung eines Falls eines mobilen Endgeräts (20), insbesondere aus einer Halterung, wobei das Verfahren zur Erkennung des Falls

   • Drehratensensorgrößen des mobilen Endgeräts (20) erfasst, und
   • Beschleunigungsgrößen des mobilen Endgeräts (20) erfasst, und
   • eine Rotation des mobilen Endgeräts (20) in Abhängigkeit der Drehratensensorgrößen erkennt, und
   • eine Bewegung des mobilen Endgeräts (20) in Abhängigkeit der Beschleunigungsgrößen erkennt, und
   • eine Fall-Information in Abhängigkeit von der erkannten Rotation und der erkannten Bewegung erzeugt.

2. Verfahren nach Anspruch 1, **dadurch gekennzeichnet, dass** die Halterung an einem Fahrzeug (10) befestigt ist, wobei das Verfahren

   • eine Bewegungsebene des Fahrzeugs in Abhängigkeit der Drehratensensorgrößen oder Beschleunigungssensorgrößen erkennt, wobei die Bewegungsebene aus einer Längsrichtung (x) als bevorzugte Bewegungsrichtung und eine Querrichtung (y) als seitliche Bewegungsrichtung besteht, und
• die Rotation in Abhängigkeit der Drehratensensorgrößen in Längsrichtung und Querrichtung erkennt.

3. Verfahren nach einem der vorherigen Ansprüche, **dadurch gekennzeichnet, dass** das Verfahren

   • wenigstens eine Rotationsgröße in Abhängigkeit von einer Integration der Drehratensensorgrößen in wenigstens einer räumlichen Richtung bildet und
   • die Rotation in Abhängigkeit des Überschreitens eines ersten Schwellenwerts $(SW_1)$ durch die Rotationsgröße erkennt.

4. Verfahren nach Anspruch 2 und 3, **dadurch gekennzeichnet, dass** das Verfahren für jede Richtung der Bewegungsebene

   • eine Rotationsgröße bildet und einen ersten Schwellenwert $(SW_{1,x}, SW_{1,y})$ zuordnet, und
   • die Rotation in Abhängigkeit des Überschreitens wenigstens eines der jeweiligen Rotationsgröße zugeordneten ersten Schwellenwerts $(SW_{1,x}, SW_{1,y})$ durch die Rotationsgröße erkennt.

5. Verfahren nach einem der vorherigen Ansprüche, **dadurch gekennzeichnet, dass** das Verfahren

   • die Bewegung in Abhängigkeit von der Überschreitung eines zweiten Schwellenwerts $(SW_2)$ durch die Beschleunigungsgröße erkennt.

6. Verfahren nach einem der vorherigen Ansprüche, **dadurch gekennzeichnet, dass** das Verfahren

   • aus einer Mehrzahl von richtungsaufgelösten Beschleunigungsgrößen eine Beschleunigungsvarianz bildet, und
   • die Bewegung in Abhängigkeit von der Überschreitung eines dritten Schwellenwerts $(SW_3)$ durch die Beschleunigungsvarianz erkannt wird.

7. Verfahren nach einem der vorherigen Ansprüche, **dadurch gekennzeichnet, dass** das Verfahren

   • eine Bewegungsebene des Fahrzeugs in Abhängigkeit der Drehratensensorgrößen oder Beschleunigungsgrößen erkennt, wobei die Bewegungsebene aus einer Längsrichtung (x) als bevorzugte Bewegungsrichtung und eine Querrichtung (y) als seitliche Bewegungsrichtung besteht, und
• die Bewegung in Abhängigkeit der Beschleunigungsgrößen in Längsrichtung und Querrichtung erkennt.

8. Verfahren nach einem der Ansprüche 2 oder 7, **dadurch gekennzeichnet, dass** das Verfahren

   • Drehratensensorgrößen und/oder Beschleunigungsgrößen während der Bewegung des Fahrzeugs in der Bewegungsebene erfasst, und
   • die Rotation und/oder die Bewegung des mobilen Endgeräts in Abhängigkeit von der Abweichung der Drehratensensorgrößen und/oder Beschleunigungsgrößen in Längsrichtung und Querrichtung von einer Bewegung des Fahrzeugs in der Bewegungsebene erkennt.

9. Verfahren nach Anspruch 8, **dadurch gekennzeichnet, dass** das Verfahren

   • aus den erfassten Drehratensensorgrößen und/oder Beschleunigungsgrößen in der Bewegung des Fahrzeugs in der Bewegungsebene fünfte Schwellenwerte $(SW_{5,\omega}, SW_{5,a})$ ableitet, die während der Bewegung des Fahrzeugs in der Bewegungsebene nicht überschritten werden, und
   • die Rotation und/oder die Bewegung des mobilen Endgeräts in Abhängigkeit von der Überschreitung wenigstens eines fünften Schwellenwerts durch aktuell erfasste oder integrierte Drehratensensorgrößen und/oder Beschleunigungsgrößen in Längsrichtung und Querrichtung erkennt.

10. Verfahren nach einem der vorherigen Ansprüche, **dadurch gekennzeichnet, dass** das Verfahren

    • in Abhängigkeit der erkannten Rotation und/oder erkannten Bewegung des mobilen Endgeräts eine Klassifizierung der Fall-Information erzeugt.

11. Verfahren nach einem der vorherigen Ansprüche, **dadurch gekennzeichnet, dass** das Verfahren

    • in Abhängigkeit der erzeugten Fall-Information eine Funkverbindung zu einem Notruf aufbaut.

12. Mobiles Endgerät (20) zur Anbringung an oder in einer Halterung an einem Fahrzeug, insbesondere Zweirad (10), mit einer Auswerteinheit (100), welche eines der Verfahren in den Ansprüchen 1 bis 10 ausführt, wobei die Auswerteeinheit (100)

• Drehratensensorgrößen des mobilen Endgeräts (20) erfasst, und
• Beschleunigungsgrößen des mobilen Endgeräts (20) erfasst, und
• eine Rotation des mobilen Endgeräts (20) in Abhängigkeit der Drehratensensorgrößen erkennt, und
• eine Bewegung des mobilen Endgeräts (20) in Abhängigkeit der Beschleunigungsgrößen erkennt, und
• eine Fall-Information in Abhängigkeit von der erkannten Rotation und der erkannten Bewegung erzeugt.

13. Mobiles Endgerät (20) nach Anspruch 12, **dadurch gekennzeichnet, dass** das mobile Endgerät (20) eine Sendeeinheit aufweist, welche in Abhängigkeit der erzeugten Fall-Information eine Funkverbindung zu einem Notruf (150, 170) aufbaut.

# Fig. 1

10

20

z

y ⊗ → x

# Fig. 2

100

120

130

140

110

150

160

170

# Fig. 3

# Fig. 4